# EUROPEAN PATENT APPLICATION

(11) **EP 1 903 794 A2**
(43) Date of publication of application: **26.03.2008**
(21) Application number: 07009317.4
(22) Date of filing: 09.05.2007
(51) Int. Cl.: H04N 5/58

(54) **Method and apparatus for displaying moving images using contrast tones in mobile communication terminal**

(30) Priority: 19.09.2006 KR 20060090496
(71) Applicant: Samsung Electronics Co., Ltd., Suwon-si, Gyeonggi-Do (KR)
(72) Inventor: Choi, Chi Ho, Suwon-si Gyeonggi-do (KR)
(74) Representative: Lang, Johannes

(57) **Abstract**

Provided are a method and apparatus for displaying a moving image using a plurality of contrast tones in a mobile communication terminal, which allow effective display of color moving image data. The method includes generating contrast tone moving image data represented by a plurality of contrast tones from color moving image data, wherein the contrast tones vary depending on an ambient brightness; and displaying an moving image using the generated contrast tone moving image data. The method and apparatus enable a moving image to be naturally rendered by making full use of contrast tones even when an input moving image screen is too bright or too dark.

## Description

### BACKGROUND OF THE INVENTION

### Field of the Invention:

The present invention relates to a mobile communication terminal. More particularly, the present invention relates to a method and apparatus for displaying moving images using a plurality of contrast tones in a mobile communication terminal, thereby effectively displaying color moving image data.

### Description of the Related Art:

In general, a mobile communication terminal refers to a terminal that is carried by an individual user and supports various functions using application programs and is operable with wireless communication services. Examples of a mobile communication terminal include a personal mobile communication services terminal, a personal digital assistant (PDA), a smart phone, an international mobile telecommunication 2000 (IMT-2000), and a wireless local area network (LAN) terminal.

A mobile communication terminal is equipped with a display for displaying various information based on an operating status of the terminal. The display is typically a liquid crystal display (LCD).

LCDs are categorized into black and white LCDs and color LCDs. Black and white LCDs display moving images using contrast tone levels including gray tones, not just black and white colors. A representative example of black and white LCDs is a 4 gray level LCD. A 4 gray level LCD is a 2-bit enhanced version of 1-bit black and white LCD and enables the display of all moving images using four contrast tones, i.e., white, light gray, dark gray, and black.

Thus, a mobile communication terminal with a 4 gray level LCD enables a color moving image or camera preview screen to be displayed after converting input data into contrast tone data represented by four contrast tones to match a color range of the 4 gray level LCD.

A conventional method for displaying color moving image data using contrast tones involves the conversion of color moving image data into contrast tones corresponding to gray levels for each pixel. Each gray level corresponds one-to-one to a particular contrast tone. For example, a gray level corresponding to a white contrast tone is always converted into a white moving image.

However, the conventional method applies in the same manner regardless of ambient brightness. Thus, when an ambient condition is too bright or too dark, colors in a moving image cannot be properly rendered.

For example, when an moving image input through a camera is too bright under excessively bright ambient light conditions (e.g. 700 Lux or higher), the moving image is rendered mostly in light gray and white tones on a 4 gray level LCD screen because dark gray or black contrast tones can barely be seen. Also, a similar phenomenon occurs when a moving image that is input through a camera is too dark (e.g. 30 Lux or lower).

In the conventional method for displaying color moving image data, contrast tones corresponding to gray levels of the color moving image data remain unchanged irrespective of ambient light conditions. Thus, when ambient light conditions are too bright or too dark, only two or three contrast tones are used to display a moving image. This makes it difficult for a user to precisely recognize a moving image displayed using contrast tones.

Accordingly, there is a need for an improved method and apparatus for displaying moving images using a plurality of contrast tones in a mobile communication terminal.

### SUMMARY OF THE INVENTION

Exemplary embodiments of the present invention address at least the above problems and/or disadvantages and provide at least the advantages described below. Accordingly, an aspect of an exemplary embodiment of the present invention is to provide a method and apparatus for displaying moving images using a plurality of contrast tones in a mobile communication terminal, thereby effectively displaying color moving image data.

According to an exemplary embodiment of the present invention, there is provided a method for displaying an moving image in a mobile communication terminal. The method includes generating contrast tone moving image data represented by a plurality of contrast tones from color moving image data, wherein the contrast tones vary depending on an ambient brightness; and displaying a moving image using the generated contrast tone moving image data.

In accordance with another exemplary embodiment of the present invention, there is provided a mobile communication terminal for displaying an moving image using a plurality of contrast tones. The mobile communication terminal includes a camera module for taking a photograph of color moving image data; a data generator for generating contrast tone moving image data represented by a plurality of contrast tones from the color moving image data, wherein the contrast tones vary depending on an ambient brightness; and a display unit for displaying an moving image using the generated contrast tone moving image data.

Preferably, the data generator includes a moving image frame extractor, a monochrome frame generator, an illumination recognizer, and an moving image converter. The moving image frame extractor, the monochrome frame generator, the illumination recognizer, and the moving image converter are preferably incorporated into a control unit. Alternatively, the components can be separately installed and connected to the control unit.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain embodiments of the present invention will be more apparent from the following description taken in conjunction with the accompanying drawings, in which:
FIG. 1 is a block diagram schematically illustrating a configuration of a mobile communication terminal according to an exemplary embodiment of the present invention;
FIG. 2 is a block diagram schematically illustrating a configuration of a data generator of the mobile communication terminal shown in FIG. 1;
FIGs. 3A and 3B are a flowchart illustrating a method for displaying a moving image using contrast tones according to an exemplary embodiment of the present invention;
FIG. 4A illustrates a default gray level segmentation table according to an exemplary embodiment of the present invention;
FIG. 4B is a graphic representation of FIG. 4A;
FIG. 5A illustrates a high gray level segmentation table according to an exemplary embodiment of the present invention;
FIG. 5B is a graphic representation of FIG. 5A;
FIG. 6A illustrates a low gray level segmentation table according to an exemplary embodiment of the present invention; and
FIG. 6B is a graphic representation of FIG. 6A.

Throughout the drawings, the same drawing reference numerals will be understood to refer to the same elements, features, and structures. Further, elements and regions in the drawings may be schematically illustrated for brevity and clarity. Thus, dimensions of the elements or spacing between elements are not to scale.

### DETAILED DESCRIPTION OF EXEMPLARY EMBODIMENTS

The matters defined in the description such as a detailed construction and elements are provided to assist in a comprehensive understanding of the embodiments of the invention and are merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

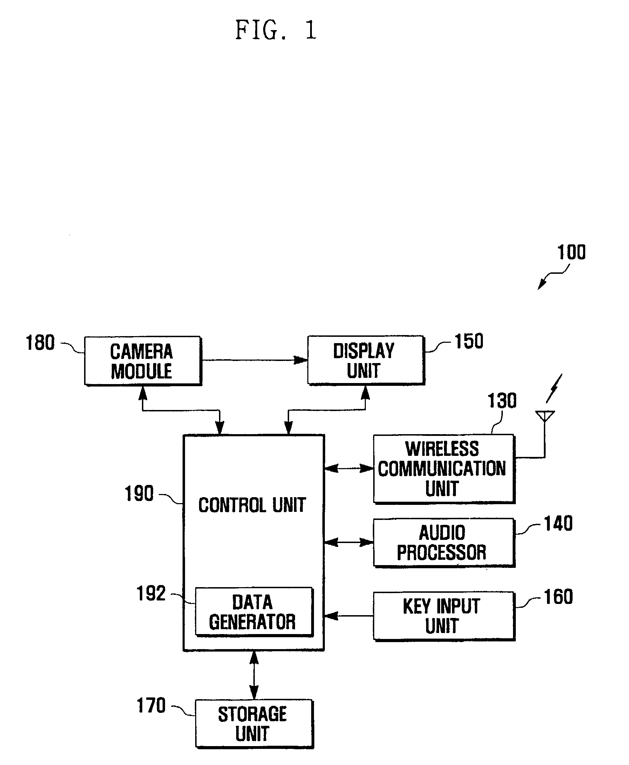

FIG. 1 is a schematic block diagram illustrating a configuration of a mobile communication terminal 100 according to an exemplary embodiment of the present invention.

Referring to FIG. 1, the mobile communication terminal 100 includes a wireless communication unit 130, an audio processor 140, a display unit 150, a key input unit 160, a camera module 180, a storage unit 170, and a control unit 190.

The wireless communication unit 130 transmits and receives data for wireless communication. To achieve this function, the wireless communication unit 130 includes an RF transmitter that up-converts the frequency of a signal being transmitted and amplifies the signal. The wireless communication unit 130 further includes an RF receiver that low-noise amplifies a signal being received and down-converts its frequency. The wireless communication unit 130 receives data through a wireless channel to output the data to the control unit 190 and receives data from the control unit 190 to transmit the data through the wireless channel.

The audio processor 140 includes a coder/decoder (codec). The codec consists of a data codec for processing data such as packet data and an audio codec for processing audio signals such as voice. Thus, the audio processor 140 converts digital audio data fed into the control unit 190 to an analog audio signal through the audio codec and plays back the analog audio signal through a speaker. The audio processor 140 also converts an analog audio signal received through a microphone to digital audio data through the audio codec and outputs the digital audio data to the control unit 190.

The key input unit 160 receives a user's manipulation signal for controlling the mobile communication terminal 100 and outputs the signal to the control unit 190. To achieve this function, the key input unit 160 includes multiple alphanumeric keys for inputting numeric and character information and control keys for controlling the operation of the mobile communication terminal 100.

The camera module 180 takes a moving image formed by a lens of a camera sensor and converts the resulting optical signal to an electrical signal. The camera sensor may be a charge coupled device (CCD) or complementary metal oxide semiconductor (CMOS) sensor. The camera sensor of the camera module 180 includes a plurality of photodiodes. The photodiode senses ambient illumination, i.e. ambient brightness when a moving image is taken, converts the sensed ambient illumination into illumination data, and transmits the illumination data to an illumination recognizer of a data generator 192.

The camera module 180 further includes a signal processor that converts an analog moving image signal output from the camera sensor to digital moving image data. The signal processor may be a digital signal processor (DSP) or other signal processor.

The display unit 150 displays data received from the control unit 190 on a screen. The display unit 150 is a 4 gray level liquid crystal display (LCD) designed to display a screen using contrast tones consisting of four gray levels such as black, dark gray, light gray, and white. However, the display unit 150 may be any other display device that can display a screen consisting of a plurality of contrast tones using a monochrome color. The display unit 150 includes an LCD control unit, a memory for storing moving image data, and an LCD display element. When the LCD is implemented using touch screen technology, the screen of the display unit 150 may function as an input unit.

The storage unit 170 includes a program memory for storing programs for controlling the operation of the mobile communication terminal 100 and a data memory for storing data generated while executing the programs, moving image data obtained by converting an moving image signal input through the camera module 180, and various moving image data stored directly by a user. The storage unit 170 also stores upper and lower thresholds for defining a range of brightness values as well as high gray level, low gray level, and default gray level segmentation tables used to generate contrast tone moving image data. The upper and lower thresholds and the high gray level, low gray level, and default gray level segmentation tables will be described in more detail later, together with a method for displaying moving images using contrast tones according to an exemplary embodiment of the present invention.

The control unit 190 performs the overall control operation of the mobile communication terminal 100. The control unit 190 also generates contrast tone moving image data, and outputs the contrast tone moving image data to the display unit 150 so that the display unit 150 can display a color moving image. To achieve this function, the control unit 190 includes a data generator 192 that selects a suitable segmentation table that is appropriate for the ambient brightness and generates contrast tone moving image data using color moving image data.

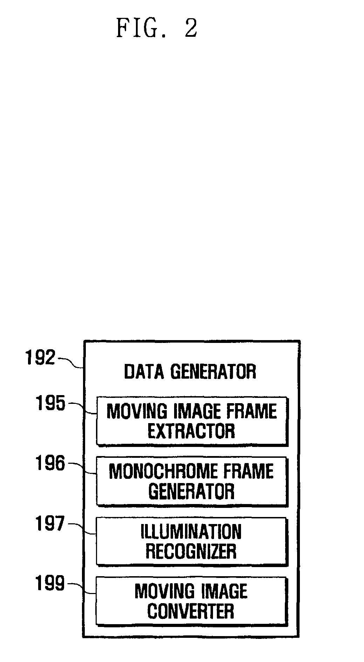

FIG. 2 is a block diagram schematically illustrating a configuration of the data generator 192 shown in FIG. 1.

Referring to FIGS. 1 and 2, the data generator 192 includes a moving image frame extractor 195, a monochrome frame generator 196, an illumination recognizer 197, and a moving image converter 199.

The moving image frame extractor 195 sequentially extracts color moving image frames from color moving image data and transmits the color moving image frames to the monochrome frame generator 196.

The monochrome frame generator 196 extracts only a specific color from a color moving image frame obtained by the moving image frame extractor 195 and generates a monochrome moving image frame having the specific color. In the present exemplary embodiment, the specific color is green because it can emphasize contrast in the monochrome moving image frame well. However, other colors may be used as the specific color.

The illumination recognizer 197 uses signals being fed from the plurality of photodiodes in the camera sensor to obtain an average illumination (hereinafter "brightness information") when a current color moving image is input. The moving image converter 199 receives brightness information from the illumination recognizer 197 and generates different contrast tone moving image data according to a range to which the brightness information belongs. That is, the moving image converter 199 converts a monochrome moving image frame to contrast tone moving image data using one of a high gray level segmentation table, a low gray level segmentation table, and a default gray level segmentation table, according to the range to which the brightness information belongs.

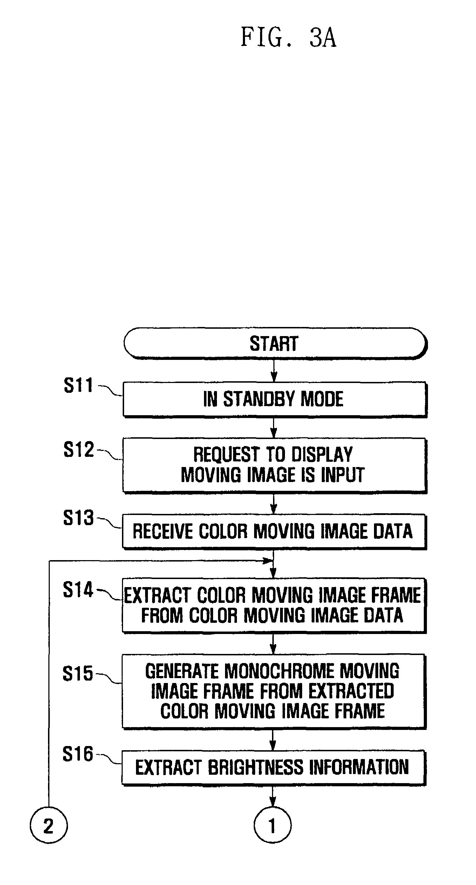

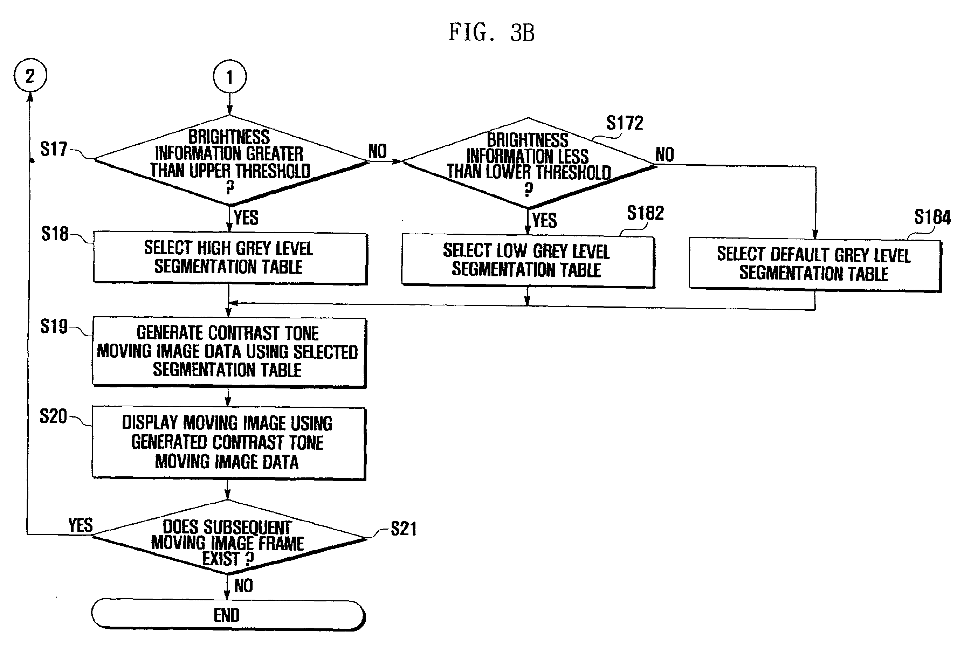

FIGs. 3A and 3B are a flowchart illustrating a method for displaying a moving image using contrast tones according to an exemplary embodiment of the present invention.

Referring to FIGS. 1-3, when the mobile communication terminal 100 is in a standby mode (S11), the control unit 190 determines whether there is a request to display a moving image (S12). A user inputs the request to display a moving image by converting the mode of the mobile communication terminal 100 to an moving image-taking mode. The control unit 190 then controls the camera module 180 to convert an moving image signal output from the camera sensor into color moving image data that is expressed by a digital signal and to output the color moving image data to the control unit 190 (S 13).

The moving image frame extractor 195 sequentially extracts a color moving image frame from the received color moving image data (S 14). The color moving image frame is the frame received first of a plurality of color moving image frames in the color moving image data.

A moving image frame with a monochrome color, such as green, is generated using the color moving image frame (S 15). The monochrome frame generator 196 extracts only green (G) information among red:green:blue (RGB) information for each pixel in the color moving image frame and generates a monochrome moving image frame based on the G information.

Thereafter, brightness information is obtained (S16). When the mobile communication terminal 100 is in a moving image-taking mode, the illumination recognizer 197 receives signals from the plurality of photodiodes in the camera sensor to calculate brightness for a current moving image being input to the camera sensor. The calculated brightness is used as the brightness information. The brightness information may be obtained by calculating an average illumination of a moving image frame. Further, the brightness information may be obtained before generating a monochrome moving image frame. That is, signals may be received from the plurality of photodiodes to obtain brightness information simultaneously with color moving image data being input to the control unit 190.

After the brightness information has been extracted by the illumination recognizer 197, the moving image converter 199 determines a range in which the brightness information lies. The moving image converter 199 determines whether the brightness information lies in a range of values greater than an upper threshold ("upper range") (S17). If the brightness information lies in the upper range, the moving image converter 199 selects a high-level segmentation table for conversion of a monochrome moving image frame (S18).

If the extracted brightness information is less than the upper threshold, the moving image converter 199 determines whether the brightness information lies in a range of values less than a lower threshold ("lower range") (S 172). If the brightness value lies in the lower range, the moving image converter 199 selects a low gray level segmentation table for conversion of a monochrome moving image frame (S 182).

In this case, the upper and lower thresholds are illumination values obtained when a screen moving image is too bright or too dark, respectively, for the user to clearly recognize the moving image. The upper and lower thresholds are predefined or modified by the user or engineer. In the present exemplary embodiment, the upper and lower thresholds are 700 Lux and 30 Lux, respectively. However, the upper and lower thresholds may be any other value that is appropriate.

If the brightness information lies in a range of values between the upper and lower thresholds("threshold range"), the moving image converter 199 selects a default gray level segmentation table (S 184) for conversion of a monochrome moving image frame.

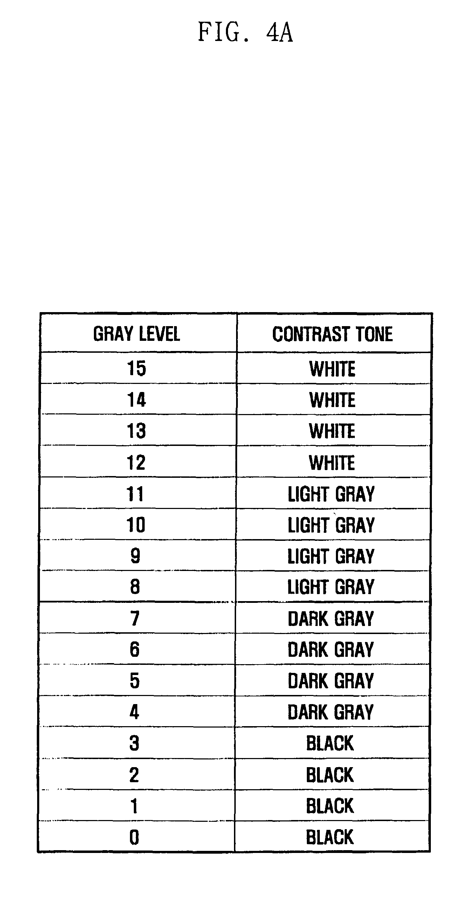

After selecting a gray level segmentation table according to the range in which the brightness information lies, the moving image converter 199 uses the selected segmentation table to convert a monochrome moving image frame to contrast tone moving image data (S19). A method for converting a monochrome moving image frame into contrast tone moving image data is described here with reference to FIGS. 4A-6B.

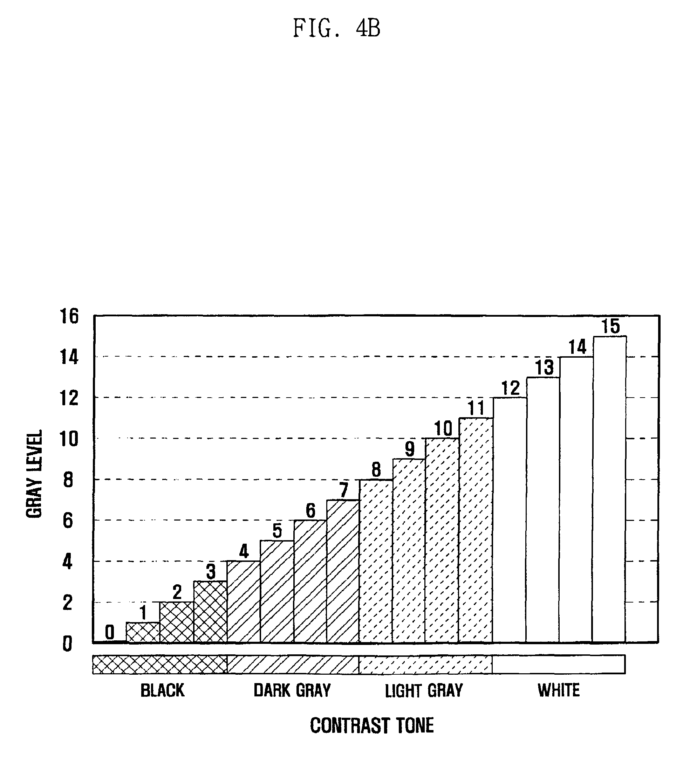

FIG. 4A illustrates a default gray level segmentation table according to an exemplary embodiment of the present invention and FIG. 4B is a graphic representation of FIG. 4A.

Referring to FIGS. 4A and 4B, the default gray level segmentation table contains 16 gray levels. That is, the entire gray scale is divided such that there are gray levels 0 to 15. As a gray level approaches 0, it represents a darker tone. As a gray level approaches 15, it represents a lighter tone.

Thus, as a gray level goes from 0 to 15, a contrast tone becomes brighter. While in the above description, a gray scale is divided into 16 gray levels, it may be divided into 32, 64, or more levels.

The 16 gray levels in the default gray level segmentation table are grouped into 4 sets that are mapped into 4 contrast tones.

Thus, one contrast tone corresponds to four gray levels. That is, black is matched to four gray levels 0 through 3. Dark gray is matched to gray levels 4 through 7. Similarly, light gray is matched to gray levels 8 through 11 while white is matched to gray levels 12 through 15.

A method for selecting a contrast tone corresponding to each pixel in a monochrome moving image frame using the default gray level segmentation table is described below in detail. The moving image converter 199 first extracts one pixel in the monochrome moving image frame to determine gray level information about the pixel. The gray level information represents a gray level indicating the brightness of the pixel. Thus, in the present embodiment, each pixel has one of 16 gray levels as gray level information.

The moving image converter 199 then selects a contrast tone corresponding to the gray level information about the pixel using the default segmentation table. Because each pixel has one gray level, each pixel is mapped to one contrast tone using the default gray level segmentation table. The same applies when high gray and low gray level segmentation tables are used.

For example, when the default gray level segmentation table is used, if the gray level of the extracted pixel is 10, light gray is selected as a contrast tone of the extracted pixel, and if the gray level of the pixel is 5, dark gray is selected as the contrast tone of the pixel.

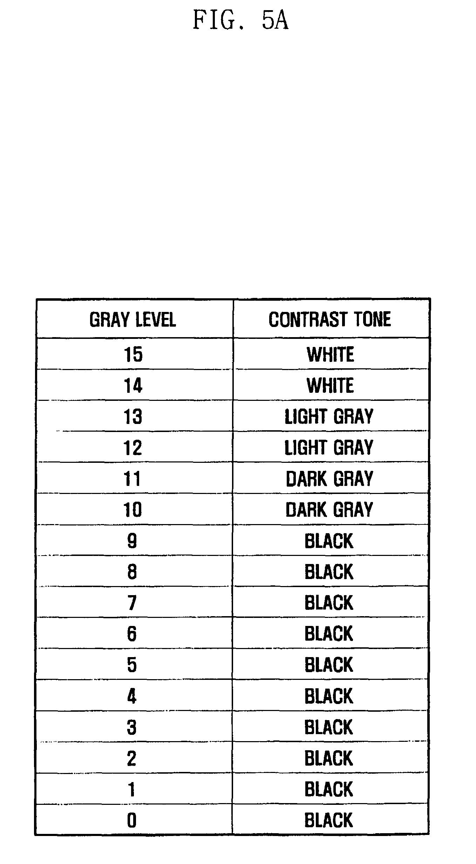

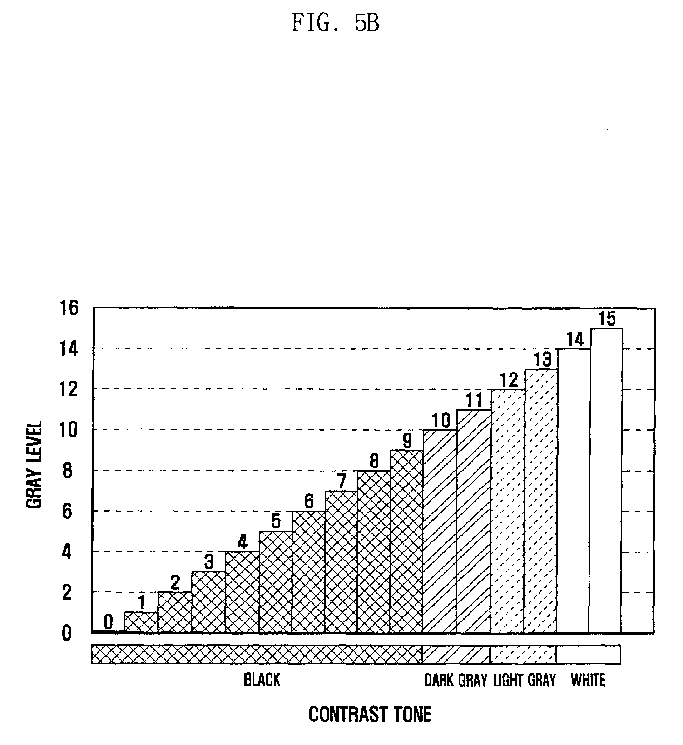

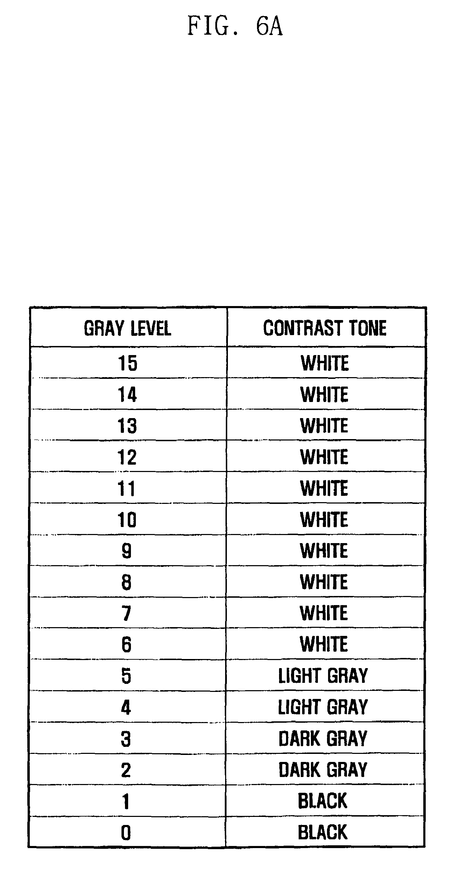

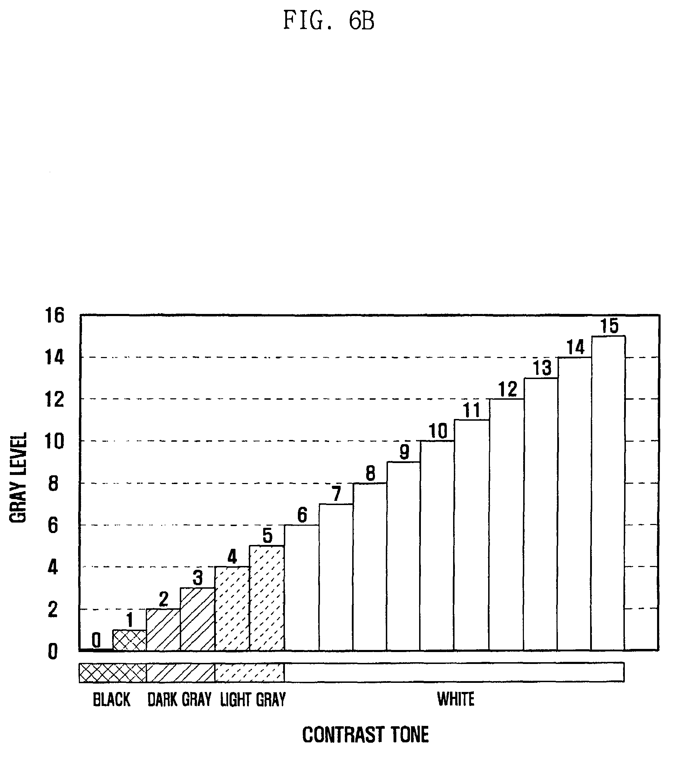

A method for selecting a contrast tone using high gray and low gray level segmentation tables is now described with reference to FIGS. 5A-6B. FIG. 5A illustrates a high gray level segmentation table according to an exemplary embodiment of the present invention and FIG. 5B is a graphic representation of FIG. 5A. FIG. 6A illustrates a low gray level segmentation table according to an exemplary embodiment of the present invention and FIG. 6B is a graphic representation of FIG. 6A.

Referring to FIGS. 5A-6B, the high gray and low gray level tables have structures similar to the default gray level segmentation table shown in FIG. 4A but have different mapping relationships between a gray level and a contrast tone.

More specifically, like the default gray level segmentation table, the high gray and low gray level segmentation tables each contain gray levels 0 to 15. As a gray level approaches 0, it represents a darker tone. As a gray level approaches 15, it represents a lighter tone. However, the difference is that high gray levels are mapped to more finely segmented contrast tones in the high gray level segmentation table than in the default gray level segmentation table shown in FIG. 4A. Similarly, low gray levels are mapped to more finely segmented contrast tones in the low gray level segmentation table than in the default gray level segmentation table.

Referring to FIGS. 5A and 5B, the high gray level segmentation table is designed such that gray levels 0 through 9 are all mapped to black while the remaining gray levels 10 through 16 are grouped into three sets and each set is sequentially mapped to a corresponding contrast tone that goes from dark to light. That is, gray levels 10 and 11 are mapped to dark gray, gray levels 12 and 13 are mapped to light gray, and gray levels 14 and 15 are mapped to white.

Similarly, referring to FIGS. 6A and 6B, the low gray level segmentation table is designed such that gray levels 6 through 15 are all mapped to white while the remaining gray levels 0 through 5 are grouped into three sets and each set is sequentially mapped to a corresponding contrast tone that goes from dark to light. That is, gray levels 0 and 1 are mapped to black, gray levels 2 and 3 are mapped to dark gray, and gray levels 4 and 5 are mapped to light gray.

Because a different gray level segmentation table is applied according to the range of brightness information in this manner, pixels having the same gray level information may have different contrast tones depending on ambient brightness. The number of gray levels corresponding to one contrast tone may vary depending on the range in which brightness information lies. For example, in the present embodiment, the number of gray levels corresponding to black is 2, 4, and 10 in the low gray level, default gray level and high gray level segmentation table respectively.

A process of selecting a contrast tone corresponding to each pixel in a monochrome moving image frame using a high gray level or low gray level segmentation table is performed in the same manner as the process of selecting a contrast tone corresponding to each pixel using the default gray level segmentation table.

For example, when the high gray level segmentation table is used, if the gray level of an extracted pixel is 10, dark gray is selected as the contrast tone of the pixel. If the gray level of an extracted pixel is 5, black is selected as the contrast tone of the pixel.

When the low gray level segmentation table is used, if the gray level of an extracted pixel is 10, white is selected as the contrast tone of the pixel. If the gray level of the pixel is 5, light gray is selected as the contrast tone of the pixel.

By repeating the above process, the moving image converter 199 selects contrast tones corresponding to all pixels in a monochrome moving image frame to generate contrast tone moving image data.

After generating contrast tone moving image data in this manner, the control unit 190 controls the display unit 150 to display an moving image on the screen using the contrast tone moving image data (S20).

The control unit 190 continues to determine whether a subsequent color moving image frame exists in the color moving image data (S21). If a subsequent color moving image frame exists in the color moving image data, the process returns to step S 14. The control unit 190 extracts the subsequent color moving image frame from the color moving image data and repeats the steps S15 through S20. In this manner, the control unit 190 continuously generates contrast tone moving image data from color moving image data and controls the display unit 150 to display a moving image.

According to exemplary embodiments of the present invention, if an ambient condition is too bright, i.e. if brightness information lies in a range of values greater than an upper threshold, contrast tone moving image data is generated using a high gray level segmentation table. Conversely, if an ambient condition is too dark, i.e. if brightness information belongs to a range of values less than a lower threshold, contrast tone moving image data is generated using a low gray level segmentation table. Thus, a method and apparatus for displaying moving images using contrast tones in a mobile communication terminal according to exemplary embodiments of the present invention enable display of natural moving images even when an input moving image screen is too bright or too dark, by fully utilizing all contrast tones.

While certain exemplary embodiments of the invention have been shown and described herein with reference to a certain preferred embodiments thereof, it will be understood by those skilled in the art that various changes in form and details may be made therein without departing from the spirit and scope of the invention as defined by the appended claims and their equivalents. For example, while exemplary embodiments of the present invention have presented three techniques for converting color moving image data into contrast tone moving image data using two thresholds (upper and lower thresholds), the color moving image data may be converted into contrast tone moving image data in various ways using three or more thresholds.

Further, although exemplary embodiments of the present invention describe an example of converting color moving image data input through a camera module into contrast tone moving image data, exemplary embodiments of the present invention can be applied to any other color moving image data such as color moving image data prestored in a storage unit. When the color moving image data stored in the storage unit is used, the entire brightness of an extracted color moving image frame is preferably calculated instead of its illumination value because the illumination value is not available.

Furthermore, exemplary embodiments of the present invention can be applied to a mobile communication terminal with an apparatus for displaying contrast tones (for example, 4 gray level LCD) and other electronic devices with a 4 gray level LCD.

As described above, a method for displaying moving image using contrast tones in a mobile communication terminal according to exemplary embodiments of the present invention enables the creation of contrast tone moving image data represented by contrast tones that can vary depending on ambient brightness.

Thus, exemplary embodiments of the present invention enable a moving image to be naturally rendered by making full use of contrast tones even when an input moving image screen is too bright or too dark.

## Claims

1. A method for displaying a moving image in a mobile communication terminal, comprising:
generating contrast tone moving image data represented by a plurality of contrast tones from color moving image data, wherein the contrast tones vary depending on ambient brightness; and
displaying a moving image using the generated contrast tone moving image data.

2. The method of claim 1, wherein the color moving image data is a preview moving image input through a camera module.

3. The method of claim 1, wherein generating contrast tone moving image data comprises:
obtaining brightness information representing ambient brightness and the color moving image;
extracting a color moving image frame from the color moving image data;
extracting only a select color from the color moving image frame to generate a monochrome moving image frame of the select color; and
converting the monochrome moving image frame into the contrast tone moving image data using the brightness information and gray-level information of each pixel in the monochrome moving image frame.

4. The method of claim 3, wherein the gray level information of each pixel represents a gray level, selected from a plurality of gray levels, indicating the brightness of the pixel.

5. The method of claim 4, wherein in converting the monochrome moving image frame into the contrast tone moving image data, the gray level information about each pixel corresponds to one of a plurality of contrast tones.

6. The method of claim 5, wherein each contrast tone corresponds to at least one of the gray levels.

7. The method of claim 5, wherein the gray level information about each pixel corresponds to a different contrast tone depending on a range in which the brightness information lies.

8. The method of claim 6, wherein the number of gray levels corresponding to each contrast tone varies depending on the range in which the brightness information lies.

9. The method of claim 6, wherein when the brightness information lies in a preset threshold range, each contrast tone correspond to the same number of gray levels.

10. The method of claim 9, wherein when the brightness information lies outside the preset threshold range, at least one contrast tone corresponds to a different number of gray levels than another contrast tone.

11. The method of claim 9, wherein the threshold range is between upper and lower thresholds that are set according to the ambient brightness information.

12. The method of claim 11, wherein the brightness information and the upper and lower thresholds are illumination values.

13. The method of claim 12, wherein the upper threshold is substantially 700 Lux.

14. The method of claim 12, wherein the lower threshold is substantially 30 Lux.

15. The method of claim 3, wherein the select color is green.

16. The method of claim 1, wherein the plurality of contrast tones are black, dark gray, light gray, and white.

17. The method of claim 1, wherein the color moving image data is color moving image data stored in a storage unit.

18. A mobile communication terminal for displaying a moving image using a plurality of contrast tones, comprising: a data generator for generating contrast tone moving image data represented by a plurality of contrast tones from color moving image data, wherein the contrast tones vary depending on ambient brightness; and a display unit for displaying a moving image using the generated contrast tone moving image data.

19. The terminal of claim 18, wherein the data generator comprises:
a moving image frame extractor for extracting a color moving image frame from the color moving image data;
a monochrome frame generator for extracting only a select color from the color moving image frame to generate a monochrome moving image frame having the select color;
an illumination recognizer for recognizing the brightness of an ambient environment in which the color moving image data is captured to obtain brightness information; and
a moving image converter for converting the monochrome moving image frame into the contrast tone moving image data using the brightness information and gray-level information about each pixel in the monochrome moving image frame.

20. The terminal of claim 18, wherein the plurality of contrast tones are black, dark gray, light gray, and white.

21. The terminal of claim 18, further comprising a storage unit for storing the color moving image data.

22. The terminal of claim 18, further comprising a camera module for capturing the color moving image data.

23. A method for displaying a moving image in a mobile communication terminal, comprising:
generating contrast tone moving image data represented by a plurality of contrast tones from color moving image data, wherein the contrast tones vary depending on a brightness associated with the color moving image data; and
displaying a moving image using the generated contrast tone moving image data.
